# EUROPEAN PATENT APPLICATION

(11) **EP 3 116 232 A1**
(43) Date of publication of application: **11.01.2017**
(21) Application number: 15306118.9
(22) Date of filing: 08.07.2015
(51) Int. Cl.: H04N 21/438

(54) **METHOD AND DEVICE FOR ACCELERATING CHANNEL CHANGES IN A VIDEO DECODING DEVICE**

(71) Applicant: Thomson Licensing, 92130 Issy-les-Moulineaux (FR)
(72) Inventor: QUERE, Thierry, 35576 Cesson-Sévigné Cedex (FR); FRALEU, Sébastien, 35576 Cesson-Sévigné Cedex (FR); BERGOT, Sébastien, 35576 Cesson-Sévigné Cedex (FR)
(74) Representative: Huchet, Anne

(57) **Abstract**

A method for accelerating channel changes from a previous channel to a new channel in a video decoding device is proposed. A salient idea is to monitor the time intervals between channel change events so as to detect when a user is looking forward quickly browsing a set of TV channels. The disclosed method comprises at least two operation modes : a normal operation mode and a burst operation mode. In case the time between two consecutive channel change events is below a first value, the disclosed method comprises operating the channel change into a burst operation mode, wherein operating the channel change in a burst operation mode comprises only a subset of the features comprised in operating the channel change in a normal operation mode.

## Description

### 1. TECHNICAL FIELD

In the following, a method for accelerating channel changes in a video decoding device is disclosed. Such method is useful to enhance the user experience when browsing TV channels received from a delivery network on a video decoding device. Corresponding device is also disclosed.

### 2. BACKGROUND ART

When switching from analog to digital TV distribution, users faced a drastic increase of the channel change time, therefore degrading the user experience. The increase of channel change time is due to multiple factors, as for instance the increasing complexity of audio, video coding, the conditional access, the service information data reception, the increasing complexity of user interfaces. Some delivery networks such as IP networks, by generating packet delivery jitter, also require an additional delay due to a de-jittering buffer.

When a user is browsing a set of TV channels, one after each, trying to get as fast as possible what is being delivered on each of them, he gets quickly annoyed by lengthy channel change times that may be up to a few seconds. Prior art methods are known to reduce the channel change time due for example to the video decoding latency by proposing double decoding in the video decoding device and double transmission on the network for a same channel with different encoding parameters. Some other prior art methods are known on IP networks for sending a burst of data at higher speed from the network to the video decoding device when a channel change occurs so as to reduce the channel change time. But all the known prior art methods aim at reducing a single channel change time and do not aim at improving the user experience when a user is browsing a set of channels, one after each, trying to know what is currently available on each channel. Some new methods are needed to improve the user experience by accelerating the channel changes for a user aiming at knowing what is currently available on a set of channels in real time.

### 3. SUMMARY

A salient idea is to monitor the time intervals between channel change events so as to detect when a user is looking forward quickly browsing a set of TV channels. A method for accelerating channel changes from a previous channel to a new channel is proposed. It comprises at least two operation modes : a normal operation mode and a burst operation mode. In case the time between two consecutive channel change events is below a first value, the disclosed method comprises operating the channel change into a burst operation mode, wherein operating the channel change in a burst operation mode comprises only a subset of the features comprised in operating the channel change in a normal operation mode.

To that end a method for accelerating channel changes in a video decoding device is disclosed. The method comprises, in case a channel change event from a previous channel to a new channel occurs:
- processing a received new multimedia stream corresponding to the new channel in a normal mode, to display the new channel;
- generating a first plurality of information items to display in a normal banner describing the new channel;

In case where the time between two channel change events is below a first value, the method further comprises:
- processing the received new multimedia stream corresponding to the new channel in a burst mode, wherein the processing in the burst mode requires less resources than the processing in the normal mode,
- generating a second plurality of information items to display in a reduced banner, describing the new channel, wherein the generating of the second plurality of information items requires less resources than the generating of the first plurality of information items;
so as to accelerate the display of the new channel and the reduced banner.

According to a preferred embodiment, in case where the time between two channel change events is below the first value, and in case the processing of a received previous multimedia stream corresponding to the previous channel was in the normal mode, the method further comprises stopping generating the first plurality of information items to display in a normal banner describing the previous channel.

According to a particularly advantageous variant, in case where the received new multimedia stream is processed in the burst mode, and in case where the time elapsed since last channel change event is above a second value, the method further comprises :
- further processing the received new multimedia stream in the normal mode;
- generating the first plurality of information items to display in the normal banner.

According to another variant, the second plurality of information items comprises the new channel name.

According to another variant, the processing (and the further processing) of the received new multimedia stream in the normal mode, further comprises:
- decoding video data from the received new multimedia stream;
- decoding audio data from the received new multimedia stream;
- enabling audio video synchronization for the new channel;
- storing the received new multimedia stream;
and the processing of the received new multimedia stream in the burst mode, further comprises:
- decoding at least one image from the received new multimedia stream.

According to another variant, the processing of the received new multimedia stream in the burst mode, further comprises:
- not decoding audio data from the received new multimedia stream;
- not enabling audio video synchronization for the new channel;
- not storing the received new multimedia stream.

According to another variant, the processing of the received new multimedia stream in the burst mode, further comprises:
- decoding audio data from the received new multimedia stream;
- not enabling audio video synchronization for the new channel;
- not storing the received new multimedia stream.

According to another variant, the processing of the received new multimedia stream in the burst mode, further comprises:
- decoding audio data from the received new multimedia stream;
- enabling audio video synchronization for the new channel;
- not storing the received new multimedia stream.

According to another variant, the processing of the received new multimedia stream in the burst mode, further comprises:
- decoding audio data from the received new multimedia stream;
- enabling audio video synchronization for the new channel;
- storing the received new multimedia stream.

According to another variant, the first plurality of information items further comprises at least one information item among:
- at least one graphical information item describing the new channel;
- a description of the current event on the new channel;
- a description of the next event on the new channel;
- a description of the available audio channels for the new channel;
- a description of the available subtitles for the new channel;
wherein the at least one information item is not comprised in the second plurality of information items.

According to another variant, the processing (and the further processing) of the received new multimedia stream in the normal mode further comprises updating a local cache comprising information items describing the new channel.

According to another variant, the method further comprises a selection by a user of at least one step, being comprised in the processing of the received new multimedia stream in the burst mode, among:
- decoding at least one image from the received new multimedia stream;
- decoding audio data from the received new multimedia stream;
- enabling audio video synchronization for the new channel;
- storing the received multimedia stream.

In a second aspect, a video decoding device for accelerating channel changes is also disclosed. The video decoding device comprising a processor that, in case a channel change event occurs from a previous channel to a new channel, is configured to :
- process a received new multimedia stream corresponding to the new channel in a normal mode, to display the new channel;
- generate a first plurality of information items to display in a normal banner describing the new channel;
in case where the time between two channel change events is below a first value, the processor is further configured to:
- process the received new multimedia stream corresponding to the new channel in a burst mode, wherein the processing in the burst mode requires less resources than the processing in the normal mode,
- generate a second plurality of information items to display in a reduced banner, describing the new channel, wherein the generating of the second plurality of information items requires less resources than the generating of the first plurality of information items;
so as to accelerate the display of the new channel and the reduced banner.

In a third aspect, a computer program for accelerating channel changes in a video decoding device is also disclosed. The computer program comprises program code instructions executable by a processor for, in case a channel change event occurs from a previous channel to a new channel:
- processing a received new multimedia stream corresponding to the new channel in a normal mode, to display the new channel;
- generating a first plurality of information items to display in a normal banner describing the new channel;
the computer program further comprises program code instructions executable by a processor for, in case where the time between two channel change events is below a first value:
- processing the received new multimedia stream corresponding to the new channel in a burst mode, wherein the processing in the burst mode requires less resources than the processing in the normal mode,
- generating a second plurality of information items to display in a reduced banner, describing the new channel, wherein the generating of the second plurality of information items requires less resources than the generating of the first plurality of information items;
so as to accelerate the display of the new channel and the reduced banner.

In a fourth aspect, a computer program product for accelerating channel changes in a video decoding device is also disclosed. The computer program product is stored on a non-transitory computer readable medium, and comprises program code instructions executable by a processor for, in case a channel change event occurs from a previous channel to a new channel:
- processing a received new multimedia stream corresponding to the new channel in a normal mode, to display the new channel;
- generating a first plurality of information items to display in a normal banner describing the new channel;
the computer program product further comprises program code instructions executable by a processor for, in case where the time between two channel change events is below a first value,:
- processing the received new multimedia stream corresponding to the new channel in a burst mode, wherein the processing in the burst mode requires less resources than the processing in the normal mode;
- generating a second plurality of information items to display in a reduced banner, describing the new channel, wherein the generating of the second plurality of information items requires less resources than the generating of the first plurality of information items;
so as to accelerate the display of the new channel and the reduced banner.

While not explicitly described, the present embodiments may be employed in any combination or sub-combination. For example, the present principles are not limited to the described variants, and any arrangement of variant can be used. Moreover the present principles are not limited to the described features comprised in the normal operation mode and the burst operation modes, and any other features is applicable for being comprised in any of the operation modes.

Besides, any characteristic or embodiment described for the method is compatible with a device intended to process the disclosed method and with a computer-readable storage medium storing program instructions.

### 4. BRIEF DESCRIPTION OF THE DRAWINGS

In the drawings, an embodiment of the present principles are illustrated. It shows:
- **Figure 1** depicts a processing device for accelerating channel changes according to a specific and non-limiting embodiment;
- **Figure 2** represents an exemplary architecture of the processing device of figure 1 according to a specific and non-limiting embodiment;
- **Figure 3** illustrates the method for accelerating channel changes according to a specific and non-limiting embodiment.

### 5. DESCRIPTION OF EMBODIMENTS

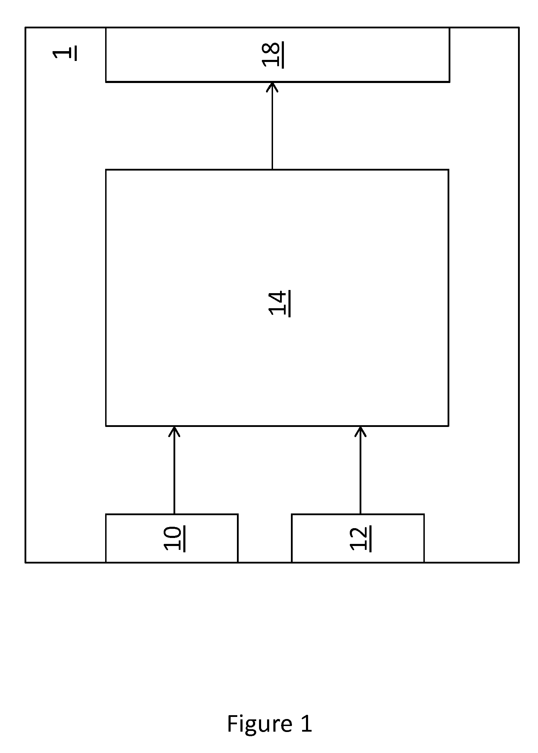

**Figure 1** depicts a processing device 1 for accelerating channel changes in case a burst of channel change events occurs.

According to a specific and non-limiting embodiment, the processing device 1 comprises an input 10 configured to receive at least one multimedia stream, comprising coded audio and video data, as well as their associated metadata. The at least one multimedia stream is received from a network interface. According to different embodiments of the principle, the network interface belongs to a set comprising
- A local area network interface such as for example Ethernet, WiFi, MoCA or a power line interface, wherein the local network interface provides a connection to a broadband delivery network via a home gateway;
- A broadband network interface, comprising a wide area network interface such as xDSL, GPON, WiMAX.
- A broadcast network interface such a digital terrestrial, cable or a satellite network interface providing a connection to a broadcast delivery network.
More generally any network interface allowing to receive at least one multimedia stream in any transmission and multiplex format, is compatible with this principle.

The processing device 1 also comprises an input 12 to receive channel selection data from a user. Channel selection data are generated by a user via a channel selection means in order to change channels on the video decoding device. According to different embodiments, the channel selection means belongs to a set comprising:
- a remote control unit communicating with the video decoding device via an infra-red or a radio frequency interface in order to send channel change data to the video decoding device;
- a smartphone or a tablet and an associated application presenting a graphical interface to the user for getting channel change requests from the user and sending channel change data to the video decoding device.
More generally any channel selection means allowing to send channel change data to a video decoding device, is compatible with this principle.

The inputs 10 and 12 are linked to a processing module 14 configured to accelerate a channel change. In case a channel change event occurs from a previous channel to a new channel, the processing module 14 is configured to process a received new multimedia stream corresponding to the new channel, in a normal mode, to display the new channel and to generate a first plurality of information items to display in a normal banner describing the new channel. In case where the time between two channel change events is below a first value, the processing module 14 is further configured to process the received new multimedia stream corresponding to the new channel, in a burst mode, wherein the processing in the burst mode requires less resources than the processing in the normal mode, and to generate a second plurality of information items to display in a reduced banner, describing the new channel, wherein the generating of the second plurality of information items requires less resources than the generating of the first plurality of information items, so as to accelerate the display of the new channel and the reduced banner.

The processed received new multimedia stream, and the generated first or second plurality of information items are sent to an output 18 such as a display means. According to a particular embodiment the display means is external to the device and the output 18 sends the data to display to an external display means. According to different embodiments of the principle, the display means, internal or external, belongs to a set comprising:
- a personal computer screen;
- a TV screen;
- a tablet;
- a smartphone screen.
More generally any display means allowing to display a processed received new multimedia stream where channel changes have been accelerated, is compatible with this principle.

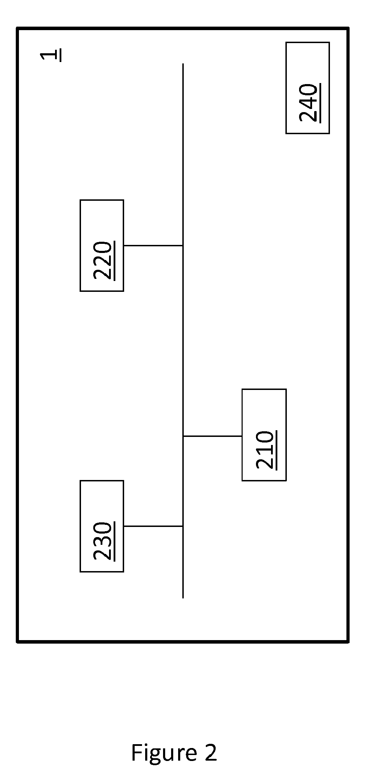

**Figure 2** represents an exemplary architecture of the processing device 1 according to a specific and non-limiting embodiment, where the processing device 1 is configured to accelerate channel changes in case bursts of channel changes occur. The memory stores the frames of the video sequence comprising the object to annotate. The processing device 1 comprises one or more processor(s) 210, which is(are), for example, a CPU, a GPU and/or a DSP (English acronym of Digital Signal Processor), along with internal memory 220 (e.g. RAM, ROM, EPROM). The processing device 1 comprises one or several Input/Output interface(s) 230 adapted to send to display output information and/or to allow a user to enter commands and/or data (e.g. a keyboard, a mouse, a touchpad, a webcam, a display), and/or to send / receive data over a network interface; and a power source 240 which may be external to the processing device 1.

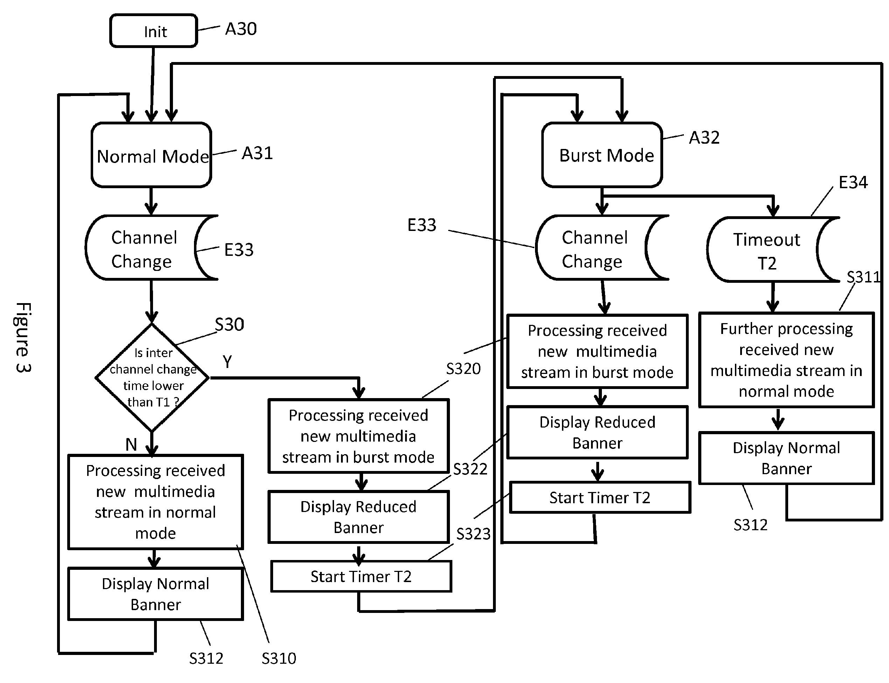

According to an exemplary and non-limiting embodiment, the processing device 1 further comprises a computer program stored in the memory 220. The computer program comprises instructions which, when executed by the processing device 1, in particular by the processor 210, make the processing device 1 carry out the processing method described with reference to figure 3. According to a variant, the computer program is stored externally to the processing device 1 on a non-transitory digital data support, e.g. on an external storage medium such as a SD Card, HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limiting embodiments, the processing device 1 is a device, which belongs to a set comprising:
- a set top box device;
- a TV device;
- a digital media player device;
- an Internet gateway device;
- a mobile device ;
- a communication device ;
- a game device ;
- a tablet (or tablet computer) ;
- a smartphone;
- a laptop.

Naturally, the present principles are not limited to the embodiments and characteristics previously described. In particular, the principle is compatible with any type of network delivering any type of multiplex of multimedia streams.

**Figure 3** illustrates a method for accelerating channel changes in a video decoding device. A channel represents a dedicated service available on a delivery network, as for example a TV channel, that can be made available to a user on a video decoding device. It usually comprises at least one multimedia stream. A multimedia stream comprises at least one video stream, at least one audio stream, and a variety of other services such as for example subtitles, graphics and metadata. A video decoding device is a device in a broad meaning and is any type of device comprising video decoding features and multimedia stream reception capabilities.

The method for accelerating channel changes in a video decoding device is represented on figure 3 as a state machine comprising states A30, A31, A32, events E33, E34 and processing steps S30, S310, S311, S312, S320, S322, S323. Events E33, E34, by their occurrence generate state A30, A31, A32 transitions and some processing steps are executed between state transitions, as described further.

The disclosed method comprises an initialization state A30, wherein various initialization processing are performed. Once the video decoding device initialization is complete and the video decoding device is ready to receive and process channel changes, a state transition occurs from initialization state A30 to normal mode state A31. Once in the normal mode state A31, the video decoding device monitors the time intervals between channel change events E33 for either remaining in the normal mode state A31, or transitioning into a burst mode state A32. Similarly, once in the burst mode state A32 the video decoding device monitors the time intervals between channel change events E33 for either remaining in the burst mode state A32, or transitioning back into the normal mode state A31.

### Channel change events

Channel change events E33 occur from the reception and the processing of channel change data. As previously described, channel change data are received via a channel selection means, such as for example a remote control or a smartphone application. Channel change data are a part of a broader set of user data being received by the video decoding device from a user via a user interface, and comprise any kind of information dedicated to changing channels. The reception of channel change data indicates a user is requesting the video decoding device to switch to a new channel. In a first variant, channel change data is an information item comprising an identifier of a new channel, the user is requesting the video decoding device to switch to. For example, in case a user interface is proposing a menu or a list to the user, a selection of a channel by a user is transmitted to the video decoding device in the form of an information item comprising an identifier of the new channel. For example, the identifier is a channel name, a value of a channel number or a value of an index in a list.

In a second variant, channel change data, sent by a remote control or a keyboard comprise *key_on, key_off* data. A *key_on* data indicates a user is pressing a key of the remote control / keyboard. A *key_off* data indicates a user released the corresponding key of the remote control / keyboard. A *key_on* / *key_off* data comprises an identifier of the key that is being pressed / released by a user, as for example a digit key, or the "P+/P-" key. For example a user continuously pressing the "P+" key during ten seconds changes the channel from the channel "1 to the channel "10". In another example the user successively pressing the key "1 and "2" with very short time between both, selects the channel "12". Such techniques are well known and any of them is compatible with the described principle. In this variant, a channel change event, comprising a new channel identifier is generated from a processing of a received *key_on* / *key_off* data sequence, according to any variant, wherein the processing of a received *key_on* / *key_off* data sequence comprises the processing of both the *key_on, key_off* data values and the time intervals between the reception of the *key_on* and *key_off* data.

For any of the described variants, received new channel change data for a new channel are compared with the channel data corresponding to the channel being currently received by the video decoding device, further called previous channel. A channel change event E33 occurs in case the new channel is different from the previous channel.

### Normal mode

### Stream processing in normal mode

In the step S30, in case a channel change event E33 occurs from a previous channel to a new channel, the time between that channel change event E33 and the previous channel change event is evaluated. In case where the time between the channel change event E33 and the previous channel change event is above a first value, the video decoding device is configured to receive a new multimedia stream corresponding to the new channel, and, in the step S310, the received new multimedia stream is processed in a normal mode. Processing S310 the received new multimedia stream in normal mode is done according to any known technique. For example, the metadata describing the new multimedia stream are retrieved and processed so as to configure and start the video decoder, the audio decoder, enable the audio video synchronization, initialize the appropriate conditional access descrambling. Advantageously processing S310 of the received new multimedia stream in normal mode further comprises simultaneously storing the received new multimedia stream for time shifting or rewind purposes for the user. Advantageously processing S310 of the received new multimedia stream in normal mode further comprises updating a local cache comprising information items describing the new channel, such as for example present and following event, available audio languages, available subtitles, any program guide information from that or any other channel.

### Display a normal banner

In case where the time between the channel change event E33 and the previous channel change event is above a first value, the video decoding device is further configured in the step S312 to generate a first plurality of information items to display in a normal banner, describing the new channel. The first plurality of information items comprises graphical elements describing the new channel, that are displayed S312 in the normal banner to provide information to the user with respect to the new channel. For instance a logo describing the channel is displayed as well as the current event on that channel and/or the next event. Channel events (current or next) are for example a TV show, a film, a sport event, .... Channel event descriptions comprise textual description, duration information, as well as additional service availabilities (available audio languages and / or subtitles for that event, ...). Advantageously some interaction is provided to the user from the banner so as to access extra information with respect to an event description, or change the configuration (for example change the audio language). Any variant for displaying any information describing the new channel in a normal banner are possible and compatible with the principle.

The display S312 of such normal banners requires a significant amount of computing resources from the video decoding device in order to retrieve, generate and display the different graphical items of the banner. Moreover the processing S310 of the received new multimedia stream also requires a significant amount of computing resources from the video decoding device, and generates delays due for example to audio video synchronization, to de-jittering buffers, or to latencies in receiving some pieces of information describing the multimedia stream (such as service information tables). The processing and the various different delays contribute to an increasing channel change time that may be annoying to a user attempting to quickly browse a set of channels. Detecting a user is attempting to quickly browse a set of channel is advantageously done by monitoring and evaluating the time intervals between successive channel change events E33.

### Transitioning to burst mode

### Stream processing in a burst mode

In case where the time between the channel change event E33 and the previous channel change event is below a first value, the video decoding device is configured to receive a new multimedia stream corresponding to the new channel, and in the step S320, the received new multimedia stream is processed in a burst mode. Processing S320 the received new multimedia stream in the burst mode is a lighter processing of the received new multimedia stream, compared to the processing S310 in the normal mode, so as to display a simpler and faster feedback to the user with respect to the new channel. Processing S320 the received new multimedia stream in the burst mode comprises only a subset of the features comprised in the processing S310 of the received new multimedia stream in the normal mode. By removing some features of the stream processing, a faster but simpler feedback is provided to the user with respect to the new channel. For example processing S320 the received new multimedia stream in the burst mode comprises only basic features for changing a channel in the video decoder, wherein these basic features are also comprised and combined to other features in the processing S310 of the received new multimedia stream in the normal mode. Basic features for changing a channel for instance comprise the tuner configuration for a broadcast reception, or the selection of an IP stream via the appropriate IGMP request generation. Basic features for changing a channel also comprise the reception and the processing of the program specific information (PSI) tables of the received new multimedia stream. In a first variant, the processing S320 of the received new multimedia stream in the burst mode, comprises decoding at least one image from the received new multimedia stream, and neither fully decoding, synchronizing audio / video data, nor simultaneously storing the received new multimedia stream for time shifting or rewind purposes. In a second variant, the processing S320 of the received new multimedia stream in the burst mode, comprises decoding audio data from the received new multimedia stream, and neither fully decoding video data, synchronizing audio / video data, nor simultaneously storing the received new multimedia stream. In a third variant the processing S320 of the received new multimedia stream in the burst mode, comprises only decoding audio and video data from the received new multimedia stream, but neither synchronizing audio / video data, nor simultaneously storing the received new multimedia stream. In a fourth variant the processing S320 of the received new multimedia stream in the burst mode, comprises decoding and synchronizing audio and video data from the received new multimedia stream, but not simultaneously storing the received new multimedia stream.

As mentioned above, the processing S320 of the received new multimedia stream in the burst mode comprises only a subset of the features comprised in the processing S310 of the received new multimedia stream in the normal mode. In a variant the subset of features comprised in the processing S320 in the burst mode, is selected by the user. More precisely the disclosed method comprises a selection by a user of at least one step, being comprised in the processing S320 of the received new multimedia stream in the burst mode, among:
- decoding at least one image from the received new multimedia stream;
- decoding audio data from the received new multimedia stream;
- enabling audio video synchronization for the new channel;
- storing the received multimedia stream.

Depending on the selected subset of features comprised in the processing S320 of the burst mode, the level of feedback given to the user for a new channel and the channel change time will vary. There is a tradeoff between the channel change time and the level / richness of feedback displayed to the user with respect to the new channel. Allowing a user to configure the subsets of features comprised in the processing S320 in the burst mode is advantageous as it enables the user to adjust this tradeoff by himself.

### Display a reduced banner

In case where the time between the channel change event E33 and the previous channel change event is below a first value, the received new multimedia stream is processed in a burst mode. The video decoding device is further configured to generate a second plurality of information items to display S322 in a reduced banner for describing the new channel. The second plurality of information items comprises very simple graphical elements describing the new channel, that require very few computing resources for their generation and display S322 in the reduced banner. The amount of computing resources that are saved in the generation of the second plurality of information items and their display S322 in the reduced banner instead of the generation of the first plurality of information items and their display S310 in the normal banner, are used to accelerate the processing the received new multimedia stream in the burst mode, so as to accelerate the corresponding feedback to the user. In a first variant the second plurality of information items is only the new channel name. In a second variant, the second plurality of information items also comprises a simple graphical element describing the new channel name, as for example a channel logo.

In case the video decoding device is transitioning from the normal mode state A31 to the burst mode state A32, a channel change event E33 occurred rather quickly after the previous channel change event, and the processing of the received multimedia stream corresponding to the previous channel is still ongoing. Similarly the generation of the first plurality of information items corresponding to the previous channel is still ongoing, and consuming a significant amount of computing resources of the video decoding device. In case where the time between two channel change events is below the first value, and in case the processing of the received multimedia stream corresponding to the previous channel was in the normal mode, the generation of the first plurality of information items describing the previous channel, is advantageously stopped, so as to save computing resources.

In some cases, the generation of the first plurality of information items and the processing of the corresponding received multimedia stream are interleaved : this occurs when the generation of an information item requires some information to be retrieved from the multimedia stream, in the form of metadata for example. In such cases a first delay provides from the extraction of a metadata from the multimedia stream, followed by another delay providing from the generation of the corresponding graphical item. The display of the complete normal banner in some cases comprises several such sequences of delays. There is thus a benefit of stopping the generation of the first plurality of information items to display S310 in the normal banner, in case the video decoding device is transitioning from the normal mode state A31 to the burst mode state A32.

Moreover, in case where (i) a channel change event E33 occurs, (ii) the time between the channel change event E33 and the previous channel change event is below a first value, and (iii) the processing S320 of the received multimedia stream corresponding to the *previous* channel was in already in the burst mode, processing S320 of the received multimedia stream corresponding to the *new* channel in the burst mode also is particularly advantageous as only a few computing resources were used for the generation of the second plurality of information items for describing the previous channel. No complex interleaved stream processing / graphical information items generation is ongoing for the previous channel, and the computing resources of the video decoding device are fully available for processing S320 in the burst mode of the received new multimedia stream corresponding to the new channel, so as to display the corresponding feedback to the user even faster.

### Transitioning back to normal mode

As previously mentioned, the time between channel change events E33 is monitored. In case where the received new multimedia stream is processed S320 in the burst mode, and in case where the time elapsed since last channel change event is above a second value, the received new multimedia stream is further processed S311 in the normal mode again, and the first plurality of information items are generated to display S312 in the normal banner. In a first variant the second value is equal to the first value. In that case, the transitioning between the burst mode and the normal mode depends on a single value of channel change event time interval : at any channel change event, the time elapsed since the previous channel change event is compared to the first value. In case the time is lower, the received new multimedia stream is processed S320 in the burst mode, in case it is larger, the received new multimedia stream is further processed S311 in the normal mode again. In a second variant the second value is strictly greater than the first value, for example the second value is twice the first value. The second variant allows to maintain the operation mode in the burst mode even in case where the time between two channel change events is just a little above the first value, as long as it remains below the second value. A second value larger than the first value allows to provide more stable bursts of channel change sequences to the user.

As the processing S320 of the received new multimedia stream in the burst mode comprised a subset of the features of the processing S310 of the received new multimedia stream in normal mode, further processing S311 of the received new multimedia stream in the normal mode comprises the remaining features of the normal mode that were not comprised in the processing S320 of the received new multimedia stream in the burst mode in any of its variants. The video decoding device transitions back to the normal mode state A31. Monitoring the time between channel change events E33 for example comprises the step S323 of starting a timer T2 wherein the value of the timer is the second value. Starting a timer T2 comprises generating a Timeout event E34 in case a time corresponding to the second value has elapsed. In case where the video decoding device is in the burst mode state A32, and in case a Timeout event E34 occurs, the received multimedia stream is further processed S311 in the normal mode, and the first plurality of information items are generated to display S312 in the normal banner. Advantageously the second value, corresponding to the timeout value T2 and transitioning the video decoding device back to the normal mode is configurable by a user via a user interface.

The fact that the user stops the quick browse of the set of TV channels is detected by monitoring the time elapsed since last channel change. In a first variant, in case this monitored time is above the second value, the normal operation mode of the video decoding device is restored, comprising its usual user interface / channel banner. In a second variant, in case the monitored time elapsed since last channel change is above the second value, the channel change event is considered as a *slow* channel change event. According to the second variant, the video decoding device transitions back from the burst mode state A32 to the normal mode state A31 in case a constant number of successive slow channel change events are detected. The constant number corresponding to successive slow channel change events for transitioning the video decoding device back to the normal mode is configurable by a user via a user interface.

## Claims

1. A method for accelerating channel changes in a video decoding device, said method comprising, in case a channel change (E33) event from a previous channel to a new channel occurs:
- processing (S310) a received new multimedia stream corresponding to said new channel in a normal mode, to display said new channel;
- generating a first plurality of information items to display (S312) in a normal banner describing said new channel;
the method being **characterized in that** the method further comprises, in case where the time between two channel change (E33) events is below a first value:
- processing (S320) said received new multimedia stream corresponding to said new channel, in a burst mode, wherein the processing (S320) in said burst mode requires less resources than the processing (S310) in the normal mode;
- generating a second plurality of information items to display (S322) in a reduced banner, describing said new channel, wherein the generating of said second plurality of information items requires less resources than the generating of said first plurality of information items;
so as to accelerate the display of said new channel and said reduced banner.

2. The method according to claim 1, further comprising in case where the time between two channel change (E33) events is below said first value, and in case the processing (S310) of a received previous multimedia stream corresponding to said previous channel was in said normal mode, stopping generating said first plurality of information items to display (S312) in a normal banner describing said previous channel.

3. The method according to claim 1 or 2, wherein in case where said received new multimedia stream is processed (S320) in said burst mode, and in case where the time elapsed since last channel change event is above a second value:
- further processing (S311) said received new multimedia stream in said normal mode;
- generating said first plurality of information items to display (S312) in said normal banner.

4. The method according to any of claims 1 to 3, wherein said second plurality of information items comprises said new channel name.

5. The method according to any of claims 1 to 4, wherein
- said processing (S310) of said received new multimedia stream in said normal mode, further comprises:
- decoding video data from said received new multimedia stream;
- decoding audio data from said received new multimedia stream;
- enabling audio video synchronization for said new channel;
- storing said received new multimedia stream;
- said processing (S320) of said received new multimedia stream in said burst mode, further comprises:
- decoding at least one image from said received new multimedia stream.

6. The method according to claim 5, wherein
- said processing (S320) of said received new multimedia stream in said burst mode, further comprises:
- Not decoding audio data from said received new multimedia stream;
- Not enabling audio video synchronization for said new channel;
- Not storing said received new multimedia stream.

7. The method according to claim 5, wherein
- said processing (S320) of said received new multimedia stream in said burst mode, further comprises:
- decoding audio data from said received new multimedia stream;
- Not enabling audio video synchronization for said new channel;
- Not storing said received new multimedia stream.

8. The method according to claim 5, wherein
- said processing (S320) of said received new multimedia stream in said burst mode, further comprises:
- decoding audio data from said received new multimedia stream;
- enabling audio video synchronization for said new channel;
- Not storing said received new multimedia stream.

9. The method according to claim 5, wherein
- said processing (S320) of said received new multimedia stream in said burst mode, further comprises:
- decoding audio data from said received new multimedia stream;
- enabling audio video synchronization for said new channel;
- storing said received new multimedia stream.

10. The method according to any of claims 1 to 9, wherein said first plurality of information items further comprises at least one information item among :
- at least one graphical information item describing the new channel;
- a description of the current event on said new channel;
- a description of the next event on said new channel;
- a description of the available audio channels for said new channel;
- a description of the available subtitles for said new channel;
wherein said at least one information item is not comprised in said second plurality of information items.

11. The method according to any of claims 1 to 10, wherein said processing (S310) of said received new multimedia stream in said normal mode further comprises updating a local cache comprising information items describing the new channel.

12. The method according to any of claims 1 to 11, wherein the method further comprises a selection by a user of at least one step, being comprised in said processing (S320) of said received new multimedia stream in said burst mode, among:
- decoding at least one image from said received new multimedia stream;
- decoding audio data from said received new multimedia stream;
- enabling audio video synchronization for said new channel;
- storing said received multimedia stream.

13. A video decoding device (1) for accelerating channel changes, said video decoding device (1) comprising a processor (210) that, in case a channel change (E33) event occurs from a previous channel to a new channel, is configured to :
- process a received new multimedia stream corresponding to said new channel in a normal mode, to display said new channel;
- generate a first plurality of information items to display (S312) in a normal banner describing said new channel;
the video decoding device (1) being **characterized in that**, in case where the time between two channel change (E33) events is below a first value, the processor (210) is further configured to:
- process said received new multimedia stream corresponding to said new channel in a burst mode, wherein the processing in said burst mode requires less resources than the processing in the normal mode;
- generate a second plurality of information items to display in a reduced banner, describing said new channel, wherein the generating of said second plurality of information items requires less resources than the generating of said first plurality of information items;
so as to accelerate the display of said new channel and said reduced banner.

14. A computer program for accelerating channel changes in a video decoding device, said computer program comprising program code instructions executable by a processor for, in case a channel change (E33) event occurs from a previous channel to a new channel:
- processing (S310) a received new multimedia stream corresponding to said new channel in a normal mode, to display said new channel;
- generating a first plurality of information items to display (S312) in a normal banner describing said new channel;
the computer program being **characterized in that**, in case where the time between two channel change (E33) events is below a first value, the computer program further comprises program code instructions executable by a processor for:
- processing (S320) said received new multimedia stream corresponding to said new channel in a burst mode, wherein the processing (S320) in said burst mode requires less resources than the processing (S310) in the normal mode;
- generating a second plurality of information items to display (S322) in a reduced banner, describing said new channel, wherein the generating of said second plurality of information items requires less resources than the generating of said first plurality of information items;
so as to accelerate the display of said new channel and said reduced banner.

15. The video decoding device (1), according to claim 13, wherein said video decoding device (1) belongs to a set comprising:
- a set top box device;
- a TV device;
- a digital media player device;
- a communication device ;
- a game device.
